# EUROPÄISCHE PATENTSCHRIFT

(11) **EP 0 799 967 B1**
(45) Veröffentlichungstag und Bekanntmachung des Hinweises auf die Patenterteilung: **24.10.2001**
(21) Anmeldenummer: 97104459.9
(22) Anmeldetag: 15.03.1997
(51) Int. Cl.: E21B 10/62, B23B 51/04

(54) **Bohrkrone mit Zentrierbohrer**
Drill bit with a centring drill
Trépan de forage avec centrage du foret

(30) Priorität: 01.04.1996 DE 19613102; 24.07.1996 DE 19629837
(43) Veröffentlichungstag der Anmeldung: 08.10.1997
(73) Patentinhaber: Hawera Probst GmbH, 88212 Ravensburg (DE)
(72) Erfinder: Meyen, Hans-Peter, Dr., Louisville, KY 40223 (US); Moser, Berhard, 88361 Altshausen (DE)
(74) Vertreter: Patentanwälte Eisele, Otten, Roth & Dobler

(56) Entgegenhaltungen:
- DE-A- 2 913 501
- GB-A- 2 086 278
- US-A- 4 445 580
- PATENT ABSTRACTS OF JAPAN vol. 096, no. 005, 31.Mai 1996 & JP 08 028171 A (H G SERVICE KK), 30.Januar 1996,

## Beschreibung

Die Erfindung betrifft eine Bohrkrone mit Zentrierbohrer nach dem Oberbegriff des Anspruchs 1.

In Bohrkronen werden häufig Zentrierbohrer verwendet, um die Bohrung paßgenau an einer gewünschten Stelle anbringen zu können. Sobald die Bohrkrone selbst in das zu bohrende Material eingedrungen ist, ist der Zentrierbohrer für die örtliche Fixierung der Bohrung nicht mehr notwendig. In manchen Anwendungsfällen ist ein Zentrierbohrer im Innern der Bohrkrone sogar unerwünscht. Daher sind bereits Bohrkronen entwickelt worden und im Handel erhältlich, bei denen der Zentrierbohrer an einer Halterung angebracht ist, die in der Bohrkrone befestigt und wieder entfernbar ist. Der Zentrierbohrer wird zu Beginn der Bohrung in die Bohrkrone eingesetzt und nach dem Eindringen der Bohrkrone in das zu bohrende Material, wodurch eine Außenführung der Bohrkrone gegeben ist, entfernt.

Die Halterungen derartiger Zentrierbohrer weisen unter rechtem Winkel abstehende Haltestreben auf, die in entsprechende achsenparallele oder leicht schräg hierzu verlaufende Nuten in der Wandung der Bohrkrone eingelegt werden. Diese Nuten sind nach vorne, d.h. in Richtung der Bohrkronenseite, auf der sich die Bohrsegmente befinden, offen, so daß eine zusätzliche Halterung des Zentrierkreuzes in diesen Nuten notwendig ist. Hierzu sind Federkonstruktionen, beispielsweise Federbügel, gespreizte Blattfedern oder auch zwischen Halterung und Bohrungswandung einklemmbare Gummilappen verwendet worden. In allen diesen Fällen ergibt sich keine zufriedenstellende Fixierung des Zentrierkreuzes in der Bohrkrone. Weiterhin ist durch die kreuzförmige Anordnung der Streben ein derartiges Fixierkreuz nur bei Bohrkronen verwendbar, bei denen die Teilung der Segmente eine 90°-Aufteilung der Nuten zuläßt.

Aufgabe der Erfindung ist es daher, eine Bohrkrone mit montierbarer Zentrierbohrerhalterung vorzuschlagen, bei der eine zuverlässige Halterung und Zentrierung des Zentrierbohrers in der Bohrkrone gewährleistet ist und bei welcher auch eine von der 90°-Symmetrie abweichende Segmentverteilung der Schneidelemente an der Bohrkrone ermöglicht wird.

Diese Aufgabe wird ausgehend von einer Bohrkrone der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend umfaßt die Halterung des Zentrierbohrers einer erfindungsgemäßen Bohrkrone wenigstens einen Bolzen bzw. Steckbolzen und die Wandung der Bohrkrone wenigstens eine Aussparung zur Aufnahme des Bolzens. Der Bolzen sowie die entsprechende Aussparung sind hierbei so geformt, daß die Halterung in verriegeltem Zustand sowohl in axialer Richtung gegen Herausfallen als auch in tangentialer zur Drehmomentmitnahme arretiert ist. Ein derart in einer Aussparung gefangener Bolzen bildet eine formschlüssige Verbindung gegenüber Verschiebungen in axialer bzw. tangentialer Richtung. Somit ist der Zentrierbohrer bei gestecktem Bolzen stabil und dauerhaft in der Halterung und damit sicher in der Bohrkrone fixiert, zentriert und zur Drehmomentmitnahme gesichert.

In einer besonders vorteilhaften Ausführungform wird der Bolzen in der Halterung verschiebbar ausgebildet. Die Halterung, die bevorzugt einen scheibenförmigen zentralen Halterungskörper umfaßt, weist in diesem Fall eine entsprechende Bohrung zur verschiebbaren Aufnahme des Bolzens auf. Ein derart verschiebbarer Bolzen kann zum Einsetzen der Halterung in die Bohrkrone in eine Stellung gebracht werden, in der er problemlos ins Innere der Bohrkrone einzubringen ist. Anschließend wird der Bolzen in eine Arretierungsstellung gebracht, in der er wie oben angeführt die zugehörige Aussparung durchsetzt und in axialer Richtung bezüglich der Bohrkrone gefangen ist.

Vorzugsweise werden Rastmittel, Arretierungen oder Fixierungen oder dergleichen für den Bolzen in der Halterung vorgesehen. Auf diese Weise wird der Bolzen gegen ein versehentliches Verschieben in der Halterung gesichert, womit ebenfalls ein versehentliches Lösen der gesamten Zentrierbohrerhalterung aus der Bohrkrone durch eine derartige Verschiebung verhindert ist.

Vorteilhafterweise umfassen die Rastmittel oder dergleichen eine Aussparung wie Nut, Kerbe oder dergleichen an dem Bolzen sowie gegebenenfalls ein Druckelement, das über eine Druckfeder in die Aussparung verrastet. In einer bevorzugten Ausführungsform wird die Aussparung als Ringnut im Bolzen ausgebildet und das Druckelement durch eine Kugel gebildet. Die Druckfeder, die in einer entsprechenden Bohrung in der Halterung angeordnet ist und gegebenenfalls über eine Vorspannschraube hinsichtlich des Federdrucks regulierbar ausgebildet werden kann, drückt auf die Kugel, die ihrerseits in der Ringnut des Bolzens in gestecktem Zustand des Bolzens zum Liegen kommt. Bei einer Verschiebung des Bolzens muß hierfür soviel Druck aufgebracht werden, daß das Druckelement bzw. die Kugel gegen den Federdruck die Rastaussparung bzw. die Ringnut verläßt.

In einem vorteilhaften Ausführungsbeispiel sind zusätzliche Fangaussparungen, beispielsweise Fangnuten im Bolzen vorgesehen. Diese Fangaussparungen oder Fangnuten dienen dazu, bei einem aus der Veriegelungsstellung des Zentrierbohrers verschobenen Bolzen das Druckelement aufzunehmen und somit den Bolzen gegen ein Lösen aus der Halterung zu sichern.

In einer vorteilhaften Ausführungsform der Erfindung wird wenigstens eine zusätzliche Fixierstrebe unbeweglich an der Halterung des Zentrierbohrers angebracht, wobei wenigstens eine entsprechende Nut in der Bohrkrone zur Aufnahme der Fixierstrebe vorgesehen wird. Diese Nut ist stirnseitig, d.h. auf der Bohrkronenseite, auf der sich die Schneidsegmente befinden, offen und so breit, daß die Fixierstrebe in axialer Richtung eingeführt werden kann. Diese Nuten können einen gewinkelten Verlauf nach Art eines Bajonettverschlusses oder auch einen schrägen Verlauf aufweisen. Eine derartige Fixierstrebe mit der entsprechenden Nut fixiert die Halterung des Zentrierbohrers zusätzliche zum Bolzen in tangentialer Richtung der Bohrkrone. Somit muß der Bolzen nicht die gesamte, durch das Drehen der Bohrkrone während des Bohrens entstehende Kraft aufnehmen, da hier wenigstens eine zusätzliche Fixierstrebe zur Unterstützung vorhanden ist.

In einer besonderen Ausführungsform wird der Bolzen so ausgeführt, daß er im Arretierungszustand des Zentrierbohrers beidseitig aus der Halterung hervorsteht und beidseitig jeweils eine Aussparung durchsetzt. Auf diese Weise wird die Halterung des Zentrierbohrers auf zwei Seiten durch einen einzigen Bolzen gleichzeitig gegen axiale Verschiebung bezüglich der Achse der Bohrkrone gesichert.

In einer besonderen Ausführungsform ist wenigstens eine Aussparung für den Bolzen als geschlossene Bohrung ausgebildet. Der gesteckte Bolzen ist somit von der geschlossenen Bohrung vollständig umgeben und zuverlässig formschlüssig gehalten.

Auch bei beidseitig hervorstehendem Bolzen ist diese Form der Aussparung an beiden Enden des Bolzens verwendbar. Der Bolzen wird zum Lösen der Halterung soweit in eine Richtung verschoben, daß er auf einer Seite die entsprechende Bohrung nicht mehr durchsetzt und hierdurch auf der gegenüberliegenden Seite weiter aus der Bohrkrone hervorsteht. Die Halterung kann nun auf der Seite des gelösten Bolzens leicht angehoben werden und schräg aus der Bohrkrone herausgezogen werden, wobei auf der gegenüberliegenden Seite der hervorstehende Teil des Bolzens durch die entsprechende Bohrung herausgleitet.

In einer weiteren besonderen vorteilhaften Ausführungsform wird wenigstens eine Aussparung zur Aufnahme des Bolzens als offene Nut mit einer Querschnittsverjüngung ausgebildet. Mit ebenfalls wenigstens einer entsprechenden Ausnehmung im Bolzen ist es somit möglich, den Bolzen durch das offene Ende der Nut in diese Nut einzuführen. Eine anschließende Querverschiebung verschiebt ebenfalls die genannte Ausnehmung, beispielsweise eine entsprechende Ringnut, so daß der Bolzen die Querschnittverjüngung der Nut nicht mehr passieren kann und somit innerhalb der Nut in axialer Richtung gefangen ist.

In vorteilhaften Ausführungsformen sind auch Kombinationen der Aussparungsformen, d.h. sowohl wenigstens eine geschlossene Bohrung als auch wenigstens eine offene Nut mit Querschnittsverjüngung denkbar.

Ausführungsbeispiele der Erfindung sind in der Zeichnung dargestellt und werden anhand der Figuren nachfolgend näher erläutert.

Im einzelnen zeigen
- Fig. 1: ein erstes Ausführungsbeispiel einer erfindungsgemäßen Bohrkrone mit eingesetztem Zentrierbohrer in perspektivischer Darstellung,
- Fig. 1a: einen Querschnitt durch eine Zentrierbohrerhalterung nach Fig. 1,
- Fig. 1b: die Ansicht "A"aus Fig. 1a,
- Fig. 1c: eine Draufsicht der Zentrierbohrerhalterung nach Fig.1a,
- Fig. 1d: die Ansicht "B" aus Fig. 1c,
- Fig. 2a: eine weitere Ausführungsform in perspektivischer Darstellung,
- Fig. 2b: eine Bohrkrone gemäß Fig. 2a mit eingesetztem Zentrierbohrer jedoch in entriegeltem Zustand des Bolzens und
- Fig. 3a-c: weitere Ausführungsformen in Seitenansicht (Fig. 3a) und Draufsicht (Fig. 3b, 3c).

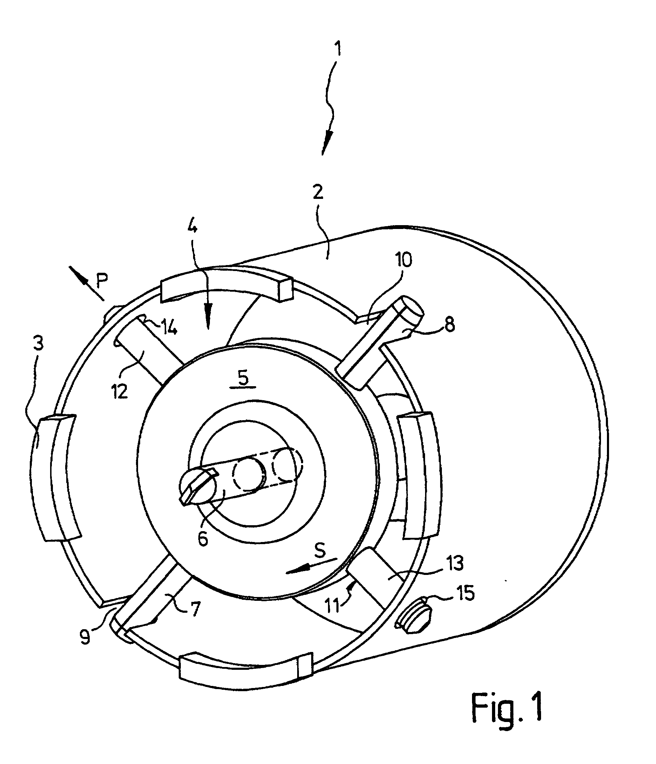

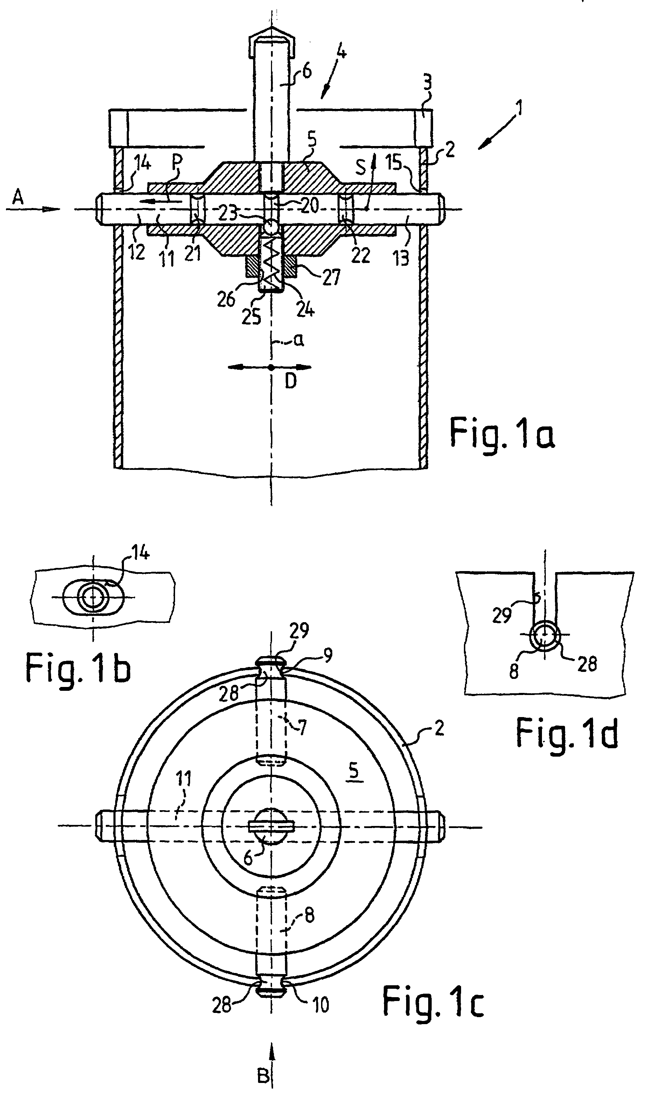

Die Bohrkrone 1 gemäß Fig. 1, 1a, 1c umfaßt ein Bohrkronenrohr 2 sowie stirnseitig angebrachte Schneidsegmente 3. Die Schneidsegmente 3 sind vorliegend unter 90° Winkeln angeordnet. Die erfindungsgemäße Zentrierbohrerhalterung 4 umfaßt einen zentralen scheibenförmigen Halterungskörper 5, an dem der Zentrierbohrer 6 befestigt ist. Seitlich unter 180° angeordnet sind zwei Fixierstreben 7, 8 vorgesehen, die entsprechende offene Nuten 9, 10 im Bohrerkronenrohr 2 durchsetzen und hierdurch nur eine Drehmomentenmitnahme bewirken. Unter rechtem Winkel zu den Fixierstreben 7, 8 ist ein Bolzen bzw. Steckbolzen 11 angeordnet, der den Halterungskörper 5 durchsetzt und mit seinen beidseitigen Fixierenden 12, 13 jeweils eine entsprechende Bohrung 14, 15 des Bohrkronenrohrs 2 durchsetzt, um eine axiale Fixierung zu erhalten.

In der nach Fig. 1 dargestellten Position ist der Zentrierbohrer 6 fest in der Bohrkrone fixiert. Aufgrund der kreuzförmigen Anordnung der Fixierstreben 7, 8 bzw. der Fixierenden 12, 13 des Steckbolzens sind keinerlei Verschiebungen in tangentialer oder radialer Richtung der Bohrkrone möglich. Gegen eine Verschiebung in axialer Richtung der Bohrkrone ist die Zentrierbohrerhalterung 4 durch die Fixierenden 12, 13 in den geschlossenen Bohrungen 14, 15 gesichert.

Zu Entnahme der Zentrierbohrererhalterung 4 wird der Bolzen 11 in eine Richtung, beispielsweise in Richtung des Pfeils P verschoben, so daß ein Fixierende, im genannten Beispiel das Fixierende 12 die entsprechende Bohrung 14 weiter durchsetzt, während das andere Fixierende, vorliegend das Fixierende 13 die zugehörige Bohrung 15 in Richtung zum Bohrkroneninneren verläßt. Nach dem Lösen dieses einen Fixierendes 13 kann die Zentrierbohrerhalterung 4 leicht schräg zur Stirnseite der Bohrkrone 1 (s. Pfeil S) angehoben werden. Während dieses Anhebens gelangen die beiden Fixierstreben 7, 8 außerhalb des Eingriffs der offenen Nuten 9, 10. Sodann kann die Zentrierbohrerhalterung 4 in seitlicher Richtung, d.h. entgegen dem Pfeil P, aus der Bohrkrone 1 entnommen werden, wobei das Fixierende 12 nun durch die Bohrung 14 gleitet und diese verläßt. Das Einsetzen der Zentrierbohrerhalterung 4 vollzieht sich in umgekehrter Reihenfolge.

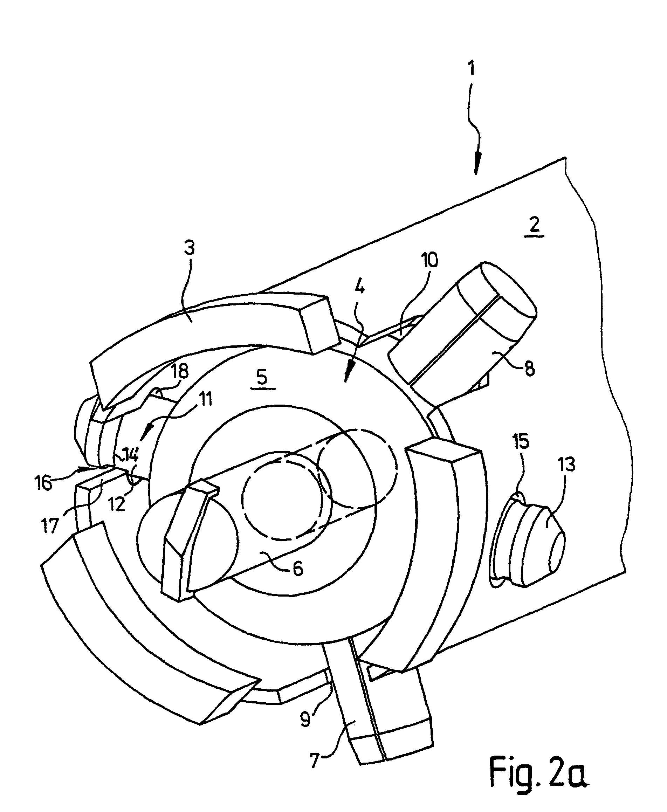

Im Ausführungsbeispiel gemäß Fig. 2a sind sowohl die Schneidsegmente 3 als auch die Fixierstreben 7, 8 unter jeweils einem Winkel von 120° verteilt. Der Bolzen 11 ist in der Zentrierbohrerhalterung 4 so angeordnet, daß ein Fixierende 12 zu den Fixierstreben 7, 8 ebenfalls unter 120° angeordnet ist. Dieses Fixierende 12 sowie die Fixierstreben 7, 8 sind demnach jeweils in einer Lücke zwischen den Schneidsegmenten 3 angeordnet. Das andere Fixierende 13 verlängert den Bolzen und tritt unter 180° bezüglich dem Fixierende 12 aus dem zentralen Halterungkörper 5 aus, um anschließend eine entsprechende Bohrung 15 im Bohrkronenrohr 2 zu durchsetzen.

Außer der Winkelverteilung von 120° der Fixierstreben 7, 8 entsprechend den drei Schneidsegmenten 3 unterscheidet sich das vorliegende Ausführungsbeispiel nach Fig. 2a zudem durch die Formgestaltung der Aussparung 14' zur Aufnahme des Fixierendes 12. Diese Aussparung 14' ist wiederum als offene Nut 16 ausgeführt, wobei der Boden der Nut 16 durch ein Kreissegment 18 gebildet wird, das zur Nutöffnung hin in einen Schlitz 17 übergeht. Insgesamt bildet sich hierdurch eine schlüssellochartige Form. Die Breite des Schlitzes 17 ist hierbei kleiner als der Durchmesser des Kreissegementes 18 bzw. der Durchmesser des Fixierendes 12 des Bolzens 11. Somit ist auch das Fixierende 12 des Bolzens 11 in der Nut 16 in der dargestellten Stellung gefangen und kann nicht in axialer Richtung in Bezug zur Bohrkronenachse aus der Nut 16 gezogen werden.

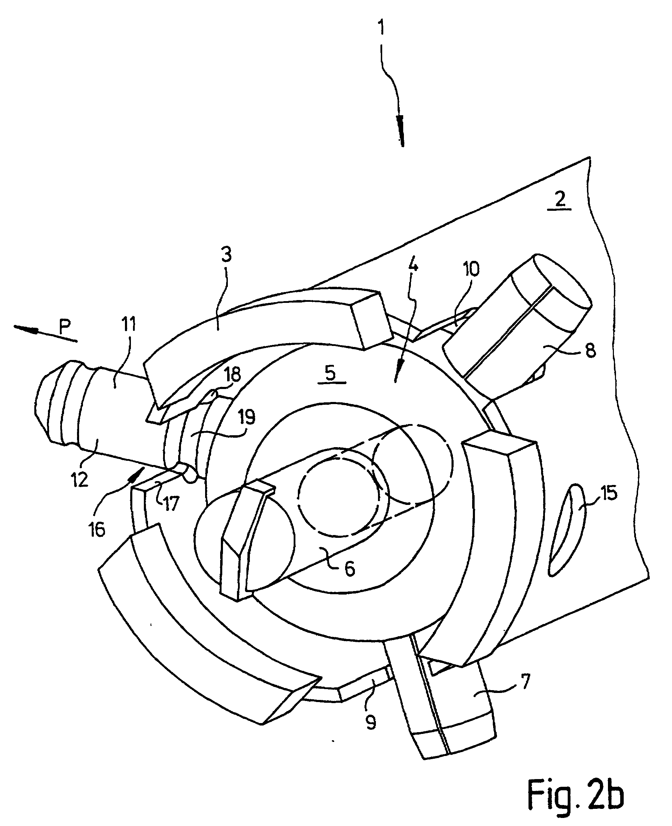

In Fig. 2b ist die Ausführung gemäß Fig. 2a in entriegeltem Zustand dargestellt. Der Bolzen 11 ist soweit in Richtung des Pfeils P verschoben, bis eine im Bolzen 11 befindliche Ringnut 19 in der Nut 16 der Bohrkronenwand 2 zu Liegen kommt. Hierdurch ist das Fixierende 13 des Bolzens 11 zugleich aus der Bohrung 15 herausgezogen. Der Durchmesser der Ringnut 19 entspricht der Breite des Schlitzes 17 bzw. ist geringfügig kleiner, so daß in dieser Stellung der Bolzen 11 aus der Nut 16 in axialer Richtung der Bohrkrone 1 entnehmbar ist. Da zudem das Fixierende 13 aus der geschlossenen Bohrung 15 gelöst ist, kann die Zentrierbohrerhalterung 4 problemlos in axialer Richtung in Bezug zur Bohrkronenachse herausgezogen werden. Das Einsetzen der Zentrierbohrerhalterung 4 vollzieht sich wiederum in umgekehrter Reihenfolge.

In der Querschnittsdarstellung gemäß Fig. 1a bzw. in der zugehörigen Draufsicht nach Fig. 1c ist erkennbar, daß der Bolzen 11, der den Halterungskörper 5 durchsetzt, neben einer zentralen bzw. mittigen Ringnut 20 zwei weitere Ringnuten 21, 22 aufweist, die als eine Art Arretierungsnuten ausgebildet sind. In die zentrale Ringnut 20 ist eine Kugel 23 eingedrückt, die über eine Druckfeder 24 angepresst wird. Die Druckfeder 24 befindet sich im Inneren einer Hohlschraube 25, die in ein entsprechendes Gewinde 26 des Halterungskörpers 5 eingeschraubt und über eine Kontermutter 27 gesichert ist. Durch Verstellung der Hohlschraube 25 läßt sich die Druckfeder 24 spannen und somit der Druck auf die Kugel 23 variieren.

Der Steckbolzen 11 kann durch Drücken auf eines seiner Fixierenden 12, 13 in Richtung des Doppelpfeils D verschoben werden. Hierbei muß soviel Druck aufgebracht werden, daß die Kugel 23 aus der Ringnut 20 gegen den Druck der Druckfeder 24 herausgedrückt wird. Hierbei stellt sich ein Druckpunkt ein, nach dessen Überwindung der Bolzen 11 leicht verschiebbar ist. Sobald eine der Arretierungsnuten 21, 22 auf Höhe der Kugel 23 kommt, rastet die Kugel 23 in die entsprechende Ringnut 21, 22 ein. Hierdurch wird vermieden, daß der Bolzen 11 ganz aus dem Halterungskörper 5 herausgezogen wird oder versehentlich herausgleiten kann, so daß die Ringnuten 21, 22 eine Art Fangnuten bilden.

Um den Bolzen 11 in die dargestellte Position nach Fig. 1, 1a zurückzubringen, wird in umgekehrter Reihenfolge verfahren, bis die Kugel 23 wieder in die zentrale Ringnut 20 einrastet. Der vorgestellte Mechanismus stellt eine dauerhaft funktionsfähige und mechanisch belastbare Lösung für eine zuverlässige Verrastung des Bolzens 11 dar. Die Zentrierbohrerhalterung 4 kann dabei schnell und ohne zusätzliches Werkzeug aus der Bohrkrone 1 entnommen werden. Zugleich ist jedoch im verriegelten Zustand des Bolzens 11 die Zentrierbohrerhalterung 4 zuverlässig gegen alle Bewegungsmöglichkeiten, insbesondere auch gegen axiale Verschiebung bezüglich der Achse a der Bohrkrone 1 gesichert.

In alternativer Ausführungsform kann die Bohrung 14 gemäß Darstellung in Fig. 1, 1a, 1b als sich in Querrichtung verbreiterndes Langloch ausgebildet sein, um ein gewisses tangentiales und auch radiales Spiel zu erlauben. In axialer Richtung soll das Fixierende 12 jedoch möglichst ohne Spiel in der Bohrung 14 angeordnet sein.

Die Enden der Fixierstreben 7, 8 können gemäß Darstellung in Fig. 1c mit Einzelheit nach Fig. 1d (Ansicht aus "B" in Fig. 1c) eine Anordnung mit zusätzlicher Ringnut 28 und Längsschlitz 29 aufweisen, um eine zusätzliche radiale Fixierung durch formschlüssiges Zusammenwirken der Ringnut 28 und des Längsschlitzes 29 zu erzielen. Im übrigen dienen die Fixierstäbe 7, 8 - wie zuvor beschrieben - der Drehmomentenmitnahme.

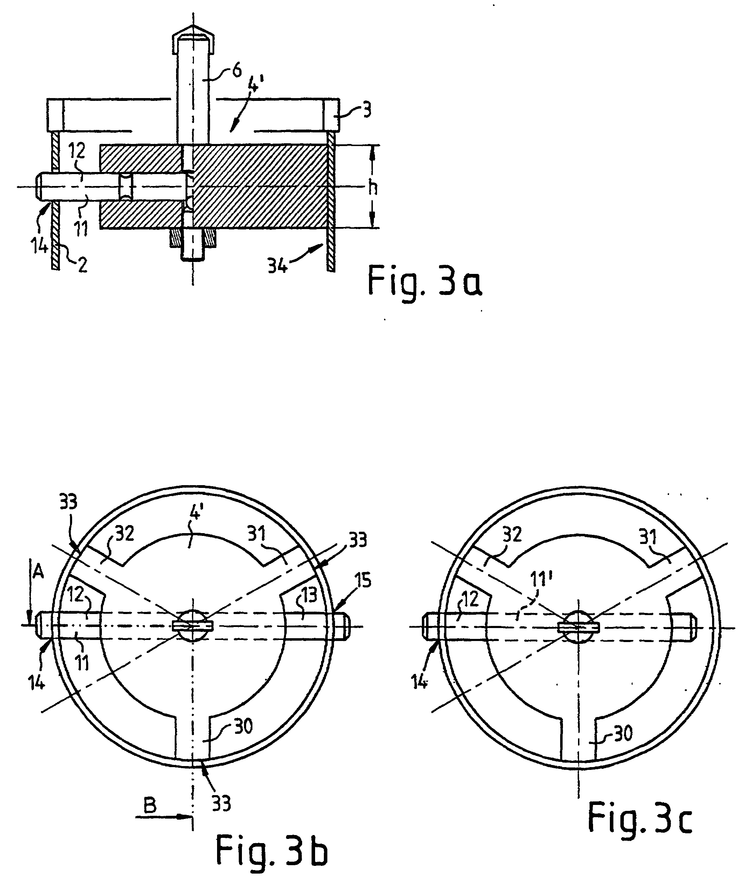

In Fig. 3a bis Fig. 3c ist ein weiteres Ausführungsbeispiel dargestellt, wobei Fig. 3a einen Schnitt entlang der Schnittlinie A-B in Fig. 3b zeigt.

Die Besonderheit der Ausführungsform nach Fig. 3a, 3b besteht darin, daß auf die Fixierstreben 7, 8 in den zuvor beschriebenen Ausführungsbeispielen verzichtet wird. Die Zentrierbohrerhalterung 4' weist gemäß der Darstellung in Fig. 3a, 3b einen Bolzen 11 auf, der mit seinem Fixierende 12 in einer ersten Bohrung 14 des Bohrkronenrohrs 2 und mit seinem anderen Fixierende 13 in der gegenüberliegenden Bohrung 15 des Bohrkronenrohrs 2 arretiert ist. Die radiale Fixierung und Halterung des Bolzens 11 folgt nach dem gleichen Prinzip und nach der gleichen Anordnung wie in der Darstellung nach Fig. 1a gezeigt und hierzu beschrieben. Auf die dortigen ergänzenden Ausführungen wird verwiesen.

Um jedoch die Fixierstreben 7, 8 aus den Figuren 1, 1a, 1c einzusparen, wird die Zentrierbohrerhalterung 4' nach Fig. 3a, Fig. 3b mit drei Flügeln 30, 31, 32 versehen, die in einem Winkelabstand von 120 ° angeordnet sind und sich über einen Höhenabschnitt h erstrecken. Die radialen Außenwandungen 33 der Flügel 30 bis 32 bilden Zylinderabschnitte mit der Höhe h, die sich an der Innenwandung 34 formschlüssig derart abstützen, daß eine Kippbewegung der Zentrierbohrerhalterung 4' wirksam vermieden wird. Die Zentrierbohrerhalterung 4' stützt sich demnach mit ihren Flügeln 30 bis 32 an der Innenwandung 34 des Bohrkronenrohrs 2 derart formschlüssig ab, daß eine exakte Fixierung innerhalb des Bohrkronenrohrs gewährleistet ist. Der Bolzen 11 hat bei diesem Ausführungsbeispiel demzufolge die Aufgabe der axialen Sicherung und Fixierung der Zentrierbohrerhalterung innerhalb des Bohrkronenrohrs sowie die Aufgabe der Drehmomentmitnahme bzw. Drehmomentübertragung vom Zentrierbohrer 6 auf das Bohrkronenrohr 2.

Der Austausch der Zentrierbohrerhalterung 4' erfolgt prinzipiell in gleicher Weise wie zu Fig. 1, 1a, 1c beschrieben, wobei der Bolzen 11 entsprechend radial verschoben oder aus der Bohrung entfernt wird. Der Vorteil der Anordnung nach Fig. 3a, 3b liegt daran, daß der obere Kranzbereich der Bohrkrone völlig unabhängig gestaltet werden kann, ohne daß axiale Längsschlitze zur Aufnahme der Fixierstreben 7, 8 benötigt werden.

Beim Ausführungsbeispiel nach Fig. 3c wird ein verkürzter Bolzen 11' verwendet, der lediglich auf einer Seite mit einem Fixierende 12 durch die zugehörige Bohrung 14 hindurchtritt und damit eine axiale Sicherung und eine Drehmomentmitnahme gewährleistet. Diese Fixierung des Bolzens 11' mit nur einer Bohrung 14 kann aufgrund der inneren Abstützung durch die Flügel 30 bis 33 durchaus ausreichend sein.

Die Erfindung ist nicht auf das dargestellte und beschriebene Ausführungsbeispiel beschränkt. Sie umfaßt auch vielmehr alle Abwandlungen im Rahmen der Schutzrechtsansprüche.
- 1: Bohrkrone
- 2: Bohrkronenrohr
- 3: Schneidsegment
- 4: Zentrierbohrerhalterung
- 5: Halterungskörper
- 6: Zentrierbohrer
- 7: Fixierstrebe
- 8: Fixierstrebe
- 9: offene Nut
- 10: offene Nut
- 11: Bolzen
- 12: Fixierende
- 13: Fixierende
- 14: Bohrung, 14' Aussparung
- 15: Bohrung
- 16: Nut
- 17: Schlitz
- 18: Kreissegment
- 19: Ringnut
- 20: Ringnut
- 21: Ringnut
- 22: Ringnut
- 23: Kugel
- 24: Druckfeder
- 25: Hohlschraube
- 26: Gewinde
- 27: Kontermutter
- 28: Ringnut
- 29: Längsschlitz
- 30: Flügel
- 31: Flügel
- 32: Flügel
- 33: Außenwandung
- 34: Innenwandung

## Patentansprüche

1. Bohrkrone (1) mit Zentrierbohrer (6), wobei der Zentrierbohrer (6) an einer in der Bohrkrone (1) befestigbaren Halterung (4) angebracht ist, **dadurch gekennzeichnet, daß** die Halterung (4) für den Zentrierbohrer (6) von wenigstens einem Bolzen (11) durchsetzt ist, der seinerseits die Wandung (2) der Bohrkrone (1) über wenigstens eine Aussparung (14, 15, 16) derart durchdringt, daß die Halterung (4) in verriegeltem Zustand wenigstens in axialer und/oder tangentialer Richtung arretiert ist.

2. Bohrkrone nach Anspruch 1, **dadurch gekennzeichnet, daß** der Bolzen (11) innerhalb der Halterung (4) radial verschiebbar und in bestimmter Lage fixierbar ist.

3. Bohrkrone nach Anspruch 1 oder 2, **dadurch gekennzeichnet, daß** Rastmittel (20, 23, 24) zur Verrastung des Bolzens (11) innerhalb der Halterung (4) vorgesehen sind.

4. Bohrkrone nach Anspruch 3, **dadurch gekennzeichnet, daß** die Rastmittel ein Druckelement (23), wie eine Kugel oder dergleichen, eine Rastaussparung (20), wie eine Ringnut oder dergleichen, sowie eine Druckfeder (24) oder dergleichen umfassen.

5. Bohrkrone nach einem der vorgenannten Ansprüche, **dadurch gekennzeichnet, daß** wenigstens eine Ringnut (21, 22) zur Arretierung bzw. radialen Fixierung am Bolzen (11) vorgesehen ist.

6. Bohrkrone nach einem der vorgenannten Ansprüche, **dadurch gekennzeichnet, daß** wenigstens eine zusätzliche Fixierstrebe (7, 8) an der Halterung (4) mit wenigstens einer entsprechenden axialen, offenen Nut (9, 10) zur Aufnahme der Fixierstrebe in der Bohrkronenwandung (2) vorgesehen sind.

7. Bohrkrone nach einem der vorgenannten Ansprüche, **dadurch gekennzeichnet, daß** der Bolzen (11) in verriegeltem Zustand beidseitig aus der Halterung (4) hervorsteht und hierbei beidseitig jeweils eine Aussparung (14, 15, 16) im Bohrkronenrohr (2) durchsetzt.

8. Bohrkrone nach einem der vorgenannten Ansprüche, **dadurch gekennzeichnet, daß** wenigstens eine Aussparung (14, 15, 16) im Bohrkronenrohr (2) als geschlossene Bohrung mit Kreisquerschnitt (14, 15) oder Rechteck- bzw. Quadratquerschnitt oder mit Kreissegmentquerschnitt (18) mit Anschlußnut (17) ausbildet ist.

9. Bohrkrone nach einem der vorgenannten Ansprüche, **dadurch gekennzeichnet, daß** wenigstens eine Aussparung (16) im Bohrkronenrohr (2) als offene Nut mit einer Querschnittsverjüngung (17, 18) ausgebildet ist.

10. Bohrkrone nach einem der vorgenannten Ansprüche, **dadurch gekennzeichnet, daß** wenigstens eine Aussparung (16) als Nut mit einer an ein Kreissegment (18) anschließenden schlitzförmigen Querschnittsverjüngung (17,18) ausgebildet ist.

11. Bohrkrone nach einem der vorhergehenden Ansprüche, **dadurch gekennzeichnet, daß** der Bolzen (11) und die Fixierstreben (7, 8) in Draufsicht auf die Bohrkrone einen Winkel von 120 ° einschließen und daß vorzugsweise wenigstens drei nach oben geöffnete Nuten (9, 10, 16) für den Bolzen (11) bzw. die Fixierstreben (7, 8) vorgesehen sind.

12. Bohrkrone nach einem der vorhergehenden Ansprüche, **dadurch gekennzeichnet, daß** die Zentrierbohrerhalterung (4') einen diese quer durchsetzenden Bolzen (11, 11') aufweist, der wenigstens eine Ausnehmung (14, 15) im Bohrkronenrohr (2) durchsetzt und daß die Halterung (4') vorzugsweise drei sich radial und symmetrisch erstreckende Flügel (30, 31, 32) aufweist, die einen axialen Wandungsabschnitt (33) mit der Höhe (h) aufweisen, wobei die Höhe (h) derart bemessen ist, daß sich die Halterung (4) an der Bohrkronenrohr-Innenwandung (34) kippgesichert formschlüssig abstützt.

## Claims

1. Drill bit (1) with centre drill (6), the centre drill (6) being attached to a holding device (4) which can be fastened in the drill bit (1), **characterised in that** the holding device (4) for the centre drill (6) is penetrated by at least one pin (11) which, in turn, penetrates the wall (2) of the drill bit (1) via at least one recess (14, 15, 16) in such a way that the holding device (4) is stopped in the bolted state at least in the axial and/or tangential direction.

2. Drill bit according to claim 1, **characterised in that** the pin (11) is radially displaceable within the holding device (4) and can be fixed in a specific position.

3. Drill bit according to claim 1 or 2, **characterised in that** latch means (20, 23, 24) for latching the pin (11) inside the holding device (4) are provided.

4. Drill bit according to claim 3, **characterised in that** the latch means comprise a pressure element (23), such as a ball or the like, a latch recess (20), such as an annular groove or the like, and a pressure spring (24) or the like.

5. Drill bit according to any one of the preceding claims, **characterised in that** at least one annular groove (21, 22) is provided on the pin (11) for stopping or radial fixing.

6. Drill bit according to any one of the preceding claims, **characterised in that** at least one additional fixing strut (7, 8) on the holding device (4) is provided with at least one corresponding axially open groove (9, 10) for receiving the fixing strut in the drill bit wall (2).

7. Drill bit according to any one of the preceding claims,
**characterised in that** in the bolted state the pin (11) projects out of the holding device (4) on both sides and in the process, penetrates a recess (14, 15, 16) in the drill bit tube (2) on both sides respectively.

8. Drill bit according to any one of the preceding claims, **characterised in that** at least one recess (14, 15, 16) in the drill bit tube (2) is formed as a closed hole with circular cross-section (14, 15) or rectangular cross-section or square cross-section or segment of a circle cross-section (18) with connection groove (17).

9. Drill bit according to any one of the preceding claims, **characterised in that** at least one recess (16) in the drill bit tube (2) is formed as an open groove with a cross-sectional taper (17, 18).

10. Drill bit according to any one of the preceding claims, **characterised in that** at least one recess (16) is designed as a groove with a slot-shaped cross-sectional taper (17, 18) adjoining a segment of a circle (18).

11. Drill bit according to any one of the preceding claims, **characterised in that** the pin (11) and the fixing struts (7, 8) enclose an angle of 120° in plan view of the drill bit and **in that** preferably at least three grooves (9, 10, 16) open at the top are provided for the pin (11) or the fixing struts (7, 8).

12. Drill bit according to any one of the preceding claims, **characterised in that** the centre drill holding device (4') has a pin (11, 11') transversely penetrating it which penetrates at least one recess (14, 15) in the drill bit tube (2), and **in that** the holding device (4') preferably has three flanks (30, 31, 32) extending radially and symmetrically which have an axial wall portion (33) with height (h), the height (h) being of a dimension such that the holding device (4) is supported with interlocking fit on the drill bit tube inner wall (34) so as to be secured against tilting.

## Revendications

1. Couronne de forage (1) ayant un foret de centrage (6), le foret de centrage (6) étant monté sur un support (4) pouvant être fixé dans la couronne de forage (1),
**caractérisée en ce que** le support (4) pour le foret de centrage (6) est traversé par au moins un axe (11) qui, de son côté, traverse la paroi (2) de la couronne de forage (1) par l'intermédiaire d'au moins un évidement (14, 15, 16), de sorte que le support (4), dans l'état verrouillé, est bloqué au moins en direction axiale et/ou tangentielle.

2. Couronne de forage selon la revendication 1,
**caractérisée en ce que** l'axe (11) peut être déplacé radialement à l'intérieur du support (4) et peut être fixé dans une position déterminée.

3. Couronne de forage selon la revendication 1 ou 2,
**caractérisée en ce que** des moyens d'encliquetage (20, 23, 24) sont prévus pour enclencher l'axe (11) à l'intérieur du support (4).

4. Couronne de forage selon la revendication 3,
**caractérisée en ce que** les moyens d'encliquetage comportent un élément de pression (23), comme une bille ou analogue, un évidement d'encliquetage (20), comme une gorge annulaire ou analogue, ainsi qu'un ressort de pression (24) ou analogue.

5. Couronne de forage selon une des revendications précitées,
**caractérisée en ce qu'**au moins une gorge annulaire (21, 22) est prévue sur l'axe (11) pour le blocage ou la fixation radiale.

6. Couronne de forage selon une des revendications précitées,
**caractérisée en ce qu'**au moins une barre de fixation supplémentaire (7, 8) est prévue sur le support (4) ayant au moins une gorge ouverte axiale correspondante (9, 10) pour recevoir la barre de fixation dans la paroi (2) de la couronne de forage.

7. Couronne de forage selon une des revendications précitées,
**caractérisée en ce que** l'axe (11), dans l'état verrouillé, fait saillie, des deux côtés, du support (4) et traverse, dans ce cas, des deux côtés, à chaque fois, un évidement (14, 15, 16) dans le tube (2) de la couronne de forage.

8. Couronne de forage selon une des revendications précitées,
**caractérisée en ce qu'**au moins un évidement (14, 15, 16) dans le tube (2) de la couronne de forage, est réalisé comme perçage fermé ayant une section transversale circulaire (14, 15) ou une section transversale rectangulaire ou quadratique ou ayant une section transversale en arc de cercle (18) avec une encoche de raccordement (17).

9. Couronne de forage selon une des revendications précitées,
**caractérisée en ce qu'**au moins un évidement (16) dans le tube (2) de la couronne de forage est réalisé comme encoche ouverte ayant un amincissement de la section transversale (17, 18).

10. Couronne de forage selon une des revendications précitées,
**caractérisée en ce qu'**au moins un évidement (16) est réalisé comme encoche ayant un amincissement de la section transversale en forme de fente (17, 18) se raccordant à un arc de cercle (18).

11. Couronne de forage selon une des revendications précédentes,
**caractérisée en ce que** l'axe (11) et les barres de fixation (7, 8) forment, en vue de dessus de la couronne de forage, un angle de 120°, et **en ce que**, avantageusement, au moins trois encoches (9, 10, 16) ouvertes vers le haut sont prévues pour l'axe (11) ou les barres de fixation (7, 8).

12. Couronne de forage selon une des revendications précédentes,
**caractérisée en ce que** le support (4') du foret de centrage présente un axe (11, 11') traversant transversalement celui-ci, qui traverse au moins un évidement (14, 15) dans le tube (2) de la couronne de forage, et **en ce que** le support (4') présente avantageusement trois ailettes (30, 31, 32) s'étendant radialement et de façon symétrique, qui présentent un tronçon de paroi axial (33) de hauteur (h), la hauteur (h) étant telle que le support (4) s'appuie, par coopération de formes, en étant garanti contre un basculement, contre la paroi interne (34) du tube de la couronne de forage.
